# EUROPEAN PATENT APPLICATION

(11) **EP 4 411 696 A1**
(43) Date of publication of application: **07.08.2024**
(21) Application number: 23218210.5
(22) Date of filing: 19.12.2023
(51) Int. Cl.: G09B 21/00

(54) **SYSTEM AND METHOD FOR ASSISTING THE VIEWING OF AUDIOVISUAL CONTENT FOR DEAF PERSONS**

(30) Priority: 01.02.2023 IT 202300001530
(71) Applicant: Media Engineering S.r.l., 00198 Roma (IT)
(72) Inventor: FRANZESE, Antonio, 00159 ROMA (IT); FRANZESE, Gianluca, 00159 ROMA (IT)
(74) Representative: Modiano, Micaela Nadia

(57) **Abstract**

A system (10) for assisting the viewing of audiovisual content for deaf persons, which comprises at least one production group (12) and at least one final user group (16);
wherein the production group (12) comprises: an audio/video mixer (22) configured to receive an audio/video signal (20) comprising audiovisual content (52); an interpreter playback device (24) configured to play back the audiovisual content (52) comprised in the audio/video signal (20); a video acquisition device (26) configured to acquire a sign language interpretation of the audiovisual content (52) and to produce a video signal (27) comprising visual content (54) showing the sign language interpretation of the audiovisual content (52); and an audio/video encoder device (28) configured to combine and synchronize the audio/video signal (20) and the video signal (27), and to produce a streaming signal (30) comprising a synchronized combination of the audio/video signal (20) and the video signal (27);
wherein the final user group (16) comprises: an audio/video decoder device (40) configured to extract the audio/video signal (20) and the video signal (27) from the streaming signal (30); and at least one user playback device (42, 44) configured to play back the audiovisual content (52) comprised in the audio/video signal (20), and/or the visual content (54), showing the sign language interpretation of the audiovisual content (52), comprised in the video signal (27).

## Description

The present invention relates to a system and a method for assisting the viewing of audiovisual content, that is to say, content that comprises both a video component and an audio component, for hearing-impaired persons, i.e. deaf persons.

The system and the method according to the invention are particularly, although not exclusively, useful and practical in the practice of assisting the viewing, by deaf persons, of television programs, that are broadcast directly and/or prerecorded. For example, these television programs can be movies, TV series, news, magazine shows, talk shows and the like.

In the present description, the expressions "deaf persons" or "hearing-impaired persons" indicate persons with an auditory disability, for example who have a hearing deficit that is congenital or acquired in childhood, or who for example have suffered partial or total loss of hearing as an adult.

Currently, to assist deaf persons with viewing audiovisual content, the use is known of subtitling, i.e. the operation of providing audiovisual content with a respective captioned text (the subtitle) superimposed on the audiovisual content, specifically on the actual frames of the audiovisual content.

The subtitle reports partially or entirely, in visual form, specifically in textual form, the dialog, or more generally the speech, reproduced in the audiovisual content.

Typically, the subtitle is superimposed on the bottom edge of the audiovisual content, and therefore it is displayed on the bottom part of the screen that displays the audiovisual content. More generally, typically, the subtitle is superimposed on a lower region of the display panel.

The subtitle can be superimposed directly on the audiovisual content, or it can be shown in dialog windows displayed superimposed over the audiovisual content.

Currently, to assist deaf persons with viewing audiovisual content, the use is also known of sign language, i.e. the operation of accompanying the audiovisual content with a corresponding sign language interpretation of that audiovisual content, which is displayed on or beside the audiovisual content.

Similarly to subtitles, the sign language interpretation reports partially or entirely, in visual form, the dialog, or more generally the speech, reproduced in the audiovisual content.

In general, sign languages, for example Italian sign language (LIS, *Lingua dei Segni Italiana*), American Sign Language (ASL) and the like, are iconographic forms of communication that convey their meanings through a coded system of hand signs, facial expressions and body movements.

The various sign languages are used by communities of signing persons, of which the majority are deaf persons.

However, these known solutions, i.e. subtitling and sign language interpretation, associated with audiovisual content, are not devoid of drawbacks.

One drawback of the current subtitling of audiovisual content is that often deaf persons, who as mentioned use a sign language, for example Italian sign language, struggle to read and understand a text in a transcribed auditory (or spoken) language, for example the Italian language.

This difficulty of deaf persons is due to the fact that sign languages, for example Italian sign language, are structured differently from auditory (or spoken) languages, for example the Italian language.

For example, differently from many auditory (or spoken) languages, which are based on a syntactic structure that follows the order subject-verb-object (SVO), sign languages have a syntactic structure that follows the order subject-object-verb (SOV).

To take a practical example, the sentence in auditory (or spoken) language "the ball is on the table" can be translated into sign language as "table ball on". In fact, in sign languages, from the iconographic point of view, one begins with the larger element, "table", proceeds with the smaller element, "ball", and finally comes to the detail, "on".

It is because of these structural linguistic differences that deaf persons often struggle to read and understand subtitles. In essence, for a deaf person, reading a transcribed auditory (or spoken) text is equivalent to reading a text in a second language, and not in a mother tongue.

One drawback of current sign language interpretation of audiovisual content is that this interpretation needs to be linked natively to that audiovisual content.

In practice, the audiovisual content and the corresponding sign language interpretation must originate from the same audiovisual production, especially if the audiovisual content is then broadcast live.

This constraint between audiovisual content and the corresponding sign language interpretation limits the range of audiovisual content available to deaf persons, because it excludes audiovisual content produced without a natively-linked sign language interpretation.

The aim of the present invention is to overcome the limitations of the known art described above, by devising a system and a method for assisting the viewing of audiovisual content for deaf persons that make it possible to obtain better effects than those that can be obtained with conventional solutions and/or similar effects at lower cost and with higher performance levels.

Within this aim, an object of the present invention is to conceive a system and a method for assisting the viewing of audiovisual content for deaf persons that make it possible to produce and provide a sign language interpretation of the audio component, in particular the speech, of any audiovisual content.

Another object of the present invention is to devise a system and a method for assisting the viewing of audiovisual content for deaf persons that make it possible to render the audio component, in particular the speech, of any audiovisual content easily comprehensible to deaf persons.

A further object of the present invention is to conceive a system and a method for assisting the viewing of audiovisual content for deaf persons that make it possible to make the audio component, in particular the speech, of any audiovisual content easily accessible to deaf persons.

Another object of the present invention is to devise a system and a method for assisting the viewing of audiovisual content for deaf persons that are easy to use in any dwelling where deaf persons reside.

Another object of the present invention is to provide a system and a method for assisting the viewing of audiovisual content for deaf persons that are highly reliable, easily and practically implemented, and economically competitive when compared to the known art.

This aim and these and other objects which will become better apparent hereinafter are achieved by a system for assisting the viewing of audiovisual content for deaf persons, which comprises at least one production group and at least one final user group, which are mutually connected via a telematic communication network;
wherein said production group comprises:
   - an audio/video mixer configured to receive an audio/video signal comprising audiovisual content;
   - an interpreter playback device configured to play back said audiovisual content comprised in said audio/video signal;
   - a video acquisition device configured to acquire a sign language interpretation of said audiovisual content and to produce a video signal comprising visual content showing said sign language interpretation of said audiovisual content; and
   - an audio/video encoder device configured to combine and synchronize said audio/video signal and said video signal, and to produce a streaming signal comprising a synchronized combination of said audio/video signal and said video signal;
wherein said final user group comprises:
   - an audio/video decoder device configured to extract said audio/video signal and said video signal from said streaming signal; and
   - at least one user playback device configured to play back said audiovisual content comprised in said audio/video signal, and/or said visual content, showing said sign language interpretation of said audiovisual content comprised in said video signal.

The above aim and objects are also achieved by a method for assisting the viewing of audiovisual content for deaf persons, by means of at least one production group and at least one final user group, which are mutually connected via a telematic communication network, which comprises the steps of:
- receiving an audio/video signal comprising audiovisual content, via an audio/video mixer comprised in said production group;
- playing back said audiovisual content comprised in said audio/video signal, via an interpreter playback device comprised in said production group;
- acquiring a sign language interpretation of said audiovisual content, and producing a video signal comprising visual content showing said sign language interpretation of said audiovisual content, by means of a video acquisition device comprised in said production group;
- combining and synchronizing said audio/video signal and said video signal, and producing a streaming signal comprising a synchronized combination of said audio/video signal and said video signal, by means of an audio/video encoder device comprised in said production group;
- extracting said audio/video signal and said video signal from said streaming signal, by means of an audio/video decoder device comprised in said final user group; and
- playing back said audiovisual content, comprised in said audio/video signal, and/or said visual content, showing said sign language interpretation of said audiovisual content, comprised in said video signal, by means of at least one user playback device comprised in said final user group.

Further characteristics and advantages of the present invention will become better apparent from the description that follows of a preferred, but not exclusive, embodiment of the system and of the method for assisting the viewing of audiovisual content for deaf persons according to the invention, illustrated by way of non-limiting example with the aid of the accompanying drawings wherein:
Figure 1 is a high-level block diagram of an embodiment of the system for assisting the viewing of audiovisual content for deaf persons according to the present invention;
Figure 2 is a detailed block diagram of an embodiment of the production group, or production side, of the system for assisting the viewing of audiovisual content for deaf persons according to the present invention;
Figure 3 is a detailed block diagram of an embodiment of the final user group, or final user side, of the system for assisting the viewing of audiovisual content for deaf persons according to the present invention;
Figure 4A, 4B and 4C show respectively a first, a second and a third embodiment of the at least one display device of the final user group of the system for assisting the viewing of audiovisual content for deaf persons according to the present invention;
Figure 5 is a schematic flowchart of an embodiment of the method for assisting the viewing of audiovisual content for deaf persons according to the present invention.

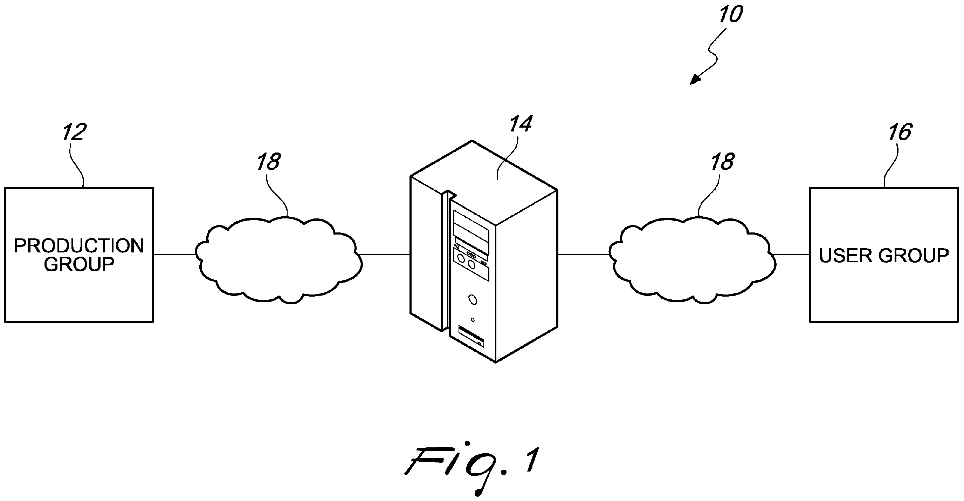

With reference to Figure 1, the system for assisting the viewing of audiovisual content for deaf persons according to the invention, generally designated by the reference numeral 10, comprises at least one production group or production side 12, and at least one final user group or final user side 16, wherein the user is a deaf person. The production group 12 and the final user group 16 are mutually connected and in communication via a telematic communication network 18. For example, the telematic communication network 18 is the internet.

In a preferred embodiment, the system 10 according to the invention further comprises at least one central distribution computer (or server) 14. The production group 12 and the central distribution computer 14 are mutually connected and in communication via the telematic communication network 18. Similarly, the final user group 16 and the central distribution computer 14 are mutually connected and in communication via the telematic communication network 18.

To this end, the production group 12, the final user group 16 and the central distribution computer 14 can comprise, or can be functionally connected to, respective transceiver modules (not shown) which are configured to establish and maintain a unidirectional or bidirectional communication via the telematic communication network 18.

The production group 12 of the system 10 according to the invention is configured to:
- receive an audio/video signal 20, for example a television signal, that is for example broadcast live and/or prerecorded, for example in high definition, which comprises audiovisual content 52 (video + audio) and which originates from an audiovisual source (not shown);
- play back the audiovisual content 52 comprised in the audio/video signal 20, specifically displaying the video component of the audiovisual content 52 and reproducing the audio component of that audiovisual content 52;
- acquire an interpretation (or performance) in sign language, for example Italian sign language, performed by a sign language interpreter 90 based on the audiovisual content 52 being played back, and producing a video signal 27 which comprises visual content 54 (video) showing the sign language interpretation of the audiovisual content 52 being played back;

- combine and synchronize the audio/video signal 20, which comprises the audiovisual content 52 (video + audio), and the video signal 27, which comprises the visual content 54 (video) showing the sign language interpretation of the audiovisual content 52, and producing a streaming signal (or stream) 30 which comprises a synchronized combination of the audio/video signal 20 and of the video signal 27; and
- transmit the streaming signal 30 to the final user group 16, if and when that final user group 16 requests it, or to the central distribution computer 14 of the system 10 according to the invention via the telematic communication network 18.

The central distribution computer 14 of the system 10 according to the invention is configured to receive the streaming signal 30 originating from the production group 12 via the telematic communication network 18. As mentioned, the streaming signal 30 comprises the synchronized combination of the audio/video signal 20, which comprises the audiovisual content 52 (video + audio), and of the video signal 27, which comprises the visual content 54 (video) showing the sign language interpretation of the audiovisual content 52.

Advantageously, the central distribution computer 14 is further configured to store the streaming signal 30 comprising the synchronized combination of the audio/video signal 20 and of the video signal 27.

To this end, the central distribution computer 14 can comprise, or can be functionally connected to, a memory unit (not shown) configured to record the streaming signal 30 comprising the synchronized combination of the audio/video signal 20 and of the video signal 27.

The central distribution computer 14 is further configured to transmit the streaming signal 30 to the final user group 16 of the system 10 according to the invention, if and when that final user group 16 requests it via the telematic communication network 18.

Basically, the central distribution computer 14 is configured to distribute the streaming signal 30, comprising the synchronized combination of the audio/video signal 20 and of the video signal 27, to the final user group 16.

This distribution of the streaming signal 30 can be live, for audiovisual content 52 that is broadcast live from the audiovisual source and interpreted into sign language at the production group 12 substantially in real time with its transmission by the audiovisual source, and/or on-demand, for prerecorded audiovisual content 52 interpreted into sign language at the production group 12 at any time comprised between its transmission by the audiovisual source and its distribution to the final user group 16, and already stored in the central distribution computer 14.

In brief, the central distribution computer 14 receives, and advantageously stores, the streaming signal 30 for streaming, originating from the production group 12, and then transmits that streaming signal 30 to the final user group 16 that requests it (if and when the final user group requests it).

The final user group 16 of the system 10 according to the invention is configured to:
- receive the streaming signal 30, originating from the production group 12 or from the central distribution computer 14 via the telematic communication network 18. As mentioned, the streaming signal 30 comprises the synchronized combination of the audio/video signal 20, which comprises the audiovisual content 52 (video + audio), and of the video signal 27, which comprises the visual content 54 (video) showing the sign language interpretation of the audiovisual content 52;
- extract the audio/video signal 20, which comprises the audiovisual content 52 (video + audio), and the video signal 27, which comprises the visual content 54 (video) showing the sign language interpretation of the audiovisual content 52, from the streaming signal 30; and
- play back the audiovisual content 52 (video + audio), comprised in the audio/video signal 20, and/or the visual content 54 (video) showing the sign language interpretation of the audiovisual content 52, comprised in the video signal 27, specifically displaying the video component of the audiovisual content 52 and reproducing the audio component of that audiovisual content 52, and specifically displaying the video component of the visual content 54.

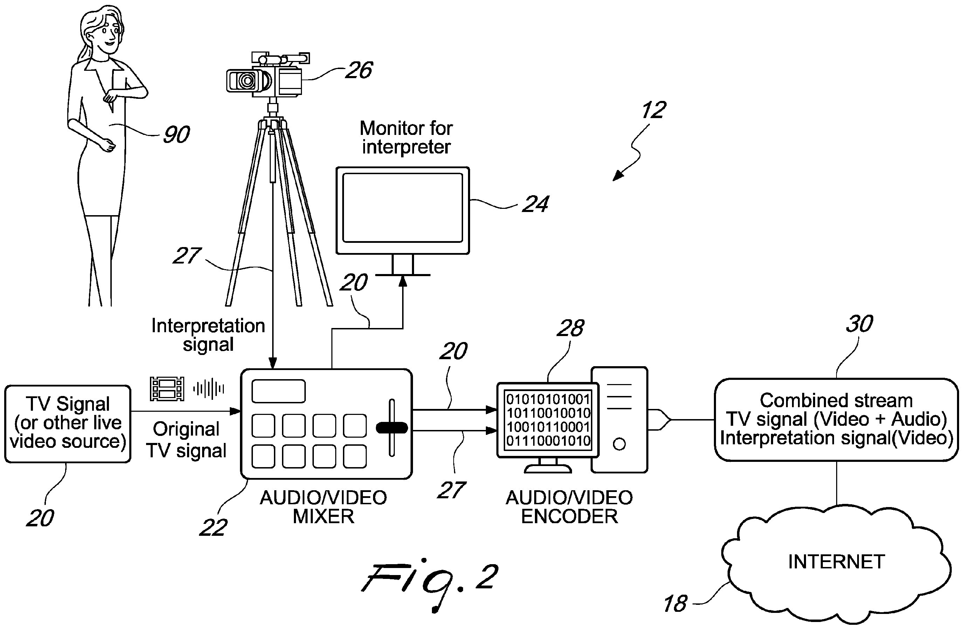

With reference to Figure 2, the production group 12 of the system 10 for assisting the viewing of audiovisual content for deaf persons according to the invention comprises an audio/video mixer 22, an interpreter playback device 24, a video acquisition device 26, and an audio/video encoder device 28.

The audio/video mixer 22 of the production group 12 is configured to receive an audio/video signal 20, for example a television signal, that is for example broadcast live and/or prerecorded, for example in high definition. This audio/video signal 20 comprises an audiovisual content 52 (video + audio). This audio/video signal 20 originates from an audiovisual source (not shown).

To this end, the audio/video mixer 22 can comprise, or can be functionally connected to, a transceiver module (not shown) configured to establish and maintain a unidirectional in input or bidirectional communication with the audiovisual source, so as to receive the audio/video signal 20.

The audio/video mixer 22 is further configured to send the audio/video signal 20, originating from the audiovisual source, to the interpreter playback device 24.

The interpreter playback device 24 is further configured to receive the audio/video signal 20, originating from the audio/video mixer 22.

To this end, the audio/video mixer 22 and the interpreter playback device 24 can be functionally connected, for example by way of respective connection ports and a connection cable.

The interpreter playback device 24 of the production group 12 is configured to play back the audiovisual content 52 (video + audio), comprised in the audio/video signal 20, originating from the audio/video mixer 22. In particular, the interpreter playback device 24 is configured to display the video component of the audiovisual content 52, and reproduce the audio component of that audiovisual content 52.

Preferably, the interpreter playback device 24 comprises a screen, for example of the television or computer monitor type. Preferably, the interpreter playback device 24 comprises at least one loudspeaker, for example of the stereo type.

The interpreter playback device 24 is arranged, i.e. positioned, proximate to a sign language interpreter 90, so that this interpreter 90 can see and hear the audiovisual content 52 comprised in the audio/video signal 20 and played back by that interpreter playback device 24, and then interpret that audiovisual content 52 into a sign language, for example Italian sign language. In other words, the interpreter playback device 24 is arranged so that the audiovisual content 52 that it plays back is visible and audible to the sign language interpreter 90.

The video acquisition device 26 of the production group 12 is configured to acquire the interpretation (or performance) in sign language, for example Italian sign language, made by the sign language interpreter 90 based on the audiovisual content 52 comprised in the audio/video signal 20 and reproduced by the interpreter playback device 24.

Similarly to the interpreter playback device 24, the video acquisition device 26 is arranged, i.e. positioned, proximate to the sign language interpreter 90, so that this interpreter 90 can be in the field of view of that video acquisition device 26 while he or she performs the sign language interpretation of the audiovisual content 52 comprised in the audio/video signal 20 and reproduced by the interpreter playback device 24. In other words, the video acquisition device 26 is arranged so that the sign language interpreter 90, and therefore the sign language interpretation of the audiovisual content 52, is visible to, and therefore acquirable by, that video acquisition device 26.

The video acquisition device 26 is further configured to produce a video signal 27 in output. This video signal 27 comprises visual content 54 (video) showing the sign language interpretation made by the sign language interpreter 90 based on the audiovisual content 52 comprised in the audio/video signal 20 and reproduced by the interpreter playback device 24.

The audio/video mixer 22 is further configured to receive the video signal 27, originating from the video acquisition device 26.

To this end, the audio/video mixer 22 and the video acquisition device 26 can be functionally connected, for example by way of respective connection ports and a connection cable.

The audio/video mixer 22 is further configured to send to the audio/video encoder device 28 both the audio/video signal 20, which comprises the audiovisual content 52 (video + audio) and which originates from the audiovisual source, and also the video signal 27, which comprises the visual content 54 (video) and which originates from the video acquisition device 26. As mentioned, the visual content 54 shows the sign language interpretation of the audiovisual content 52.

The audio/video encoder device 28 is further configured to receive both the audio/video signal 20 and the video signal 27, mentioned above, which originate from the audio/video mixer 22.

To this end, the audio/video mixer 22 and the audio/video encoder device 28 can be functionally connected, for example by way of respective connection ports and a connection cable.

The audio/video encoder device 28 of the production group 12 is configured to combine and synchronize the audio/video signal 20, which comprises the audiovisual content 52 (video + audio), and the video signal 27, which comprises the visual content 54 (video) showing the sign language interpretation of the audiovisual content 52, both originating from the audio/video mixer 22.

The audio/video encoder device 28 is further configured to produce a streaming signal (or stream) 30 as output for streaming **services.** This streaming signal 30 comprises a synchronized combination of the audio/video signal 20, which comprises the audiovisual content 52 (video + audio), and of the video signal 27, which comprises the visual content 54 (video) showing the sign language interpretation of the audiovisual content 52.

In other words, the streaming signal 30, in output from the audio/video encoder device 28, is a "container" that makes it possible to transmit together, synchronized with each other, the audio/video signal 20, which comprises the audiovisual content 52 (video + audio), and the video signal 27, which comprises the visual content 54 (video) showing the sign language interpretation of the audiovisual content 52.

The combination of the audio/video 20 and video 27 signals in a single streaming signal 30 for streaming services makes it possible to maintain a substantially perfect synchronization between the audiovisual content 52 and the visual content 54 showing the sign language interpretation of that audiovisual content 52.

This combination of the audio/video 20 and video 27 signals also enable an optimization both in terms of transmission bandwidth and in terms of versatility of the system according to the invention.

The audio/video encoder device 28 is further configured to transmit the streaming signal 30, in output from that audio/video encoder device 28, to the central distribution computer 14, via the telematic communication network 18, for example the internet.

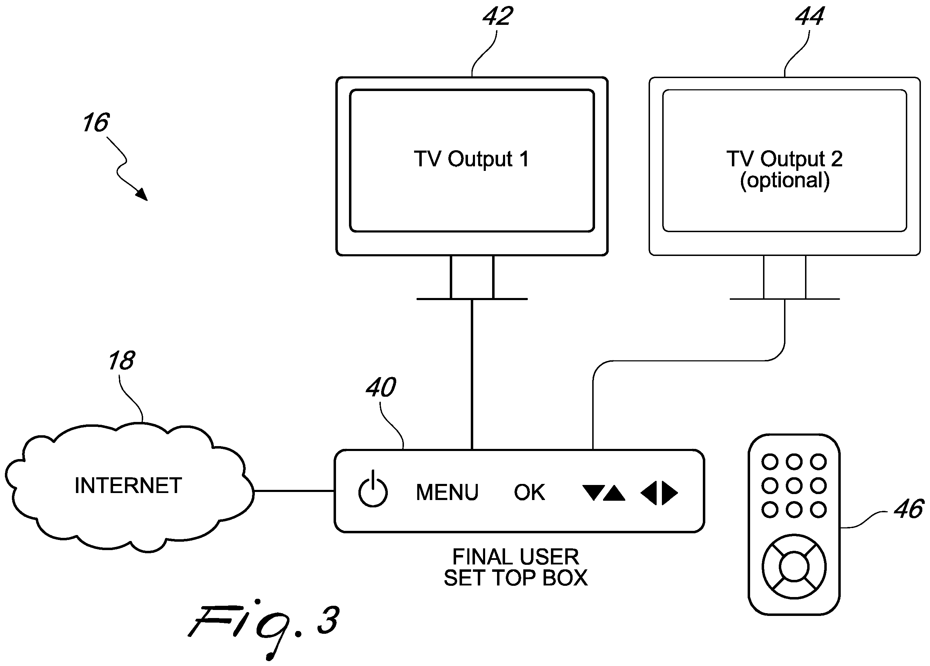

With reference to Figure 3, the final user group 16 of the system 10 for assisting the viewing of audiovisual content for deaf persons according to the invention comprises an audio/video decoder device 40 and at least one user playback device 42, 44.

The audio/video decoder device 40 (also called a set-top box) of the final user group 16 is configured to receive the streaming signal 30, originating from the central distribution computer 14, via the telematic communication network 18. As mentioned, the streaming signal 30 comprises the synchronized combination of the audio/video signal 20, which comprises the audiovisual content 52 (video + audio), and of the video signal 27, which comprises the visual content 54 (video) showing the sign language interpretation of the audiovisual content 52.

The audio/video decoder device 40 is further configured to extract the audio/video signal 20, which comprises the audiovisual content 52 (video + audio), and the video signal 27, which comprises the visual content 54 (video) showing the sign language interpretation of the audiovisual content 52, from the streaming signal 30, originating from the central distribution computer 14.

Extracting the audio/video 20 and video 27 signals from a single streaming signal 30 for streaming enables an optimization both in terms of transmission bandwidth and in terms of versatility of the system according to the invention.

The audio/video decoder device 40 is further configured to send the audio/video signal 20, which comprises the audiovisual content 52 (video + audio), and/or the video signal 27, which comprises the visual content 54 (video) showing the sign language interpretation of the audiovisual content 52, in both cases extracted from the streaming signal 30, to the user playback device 42, 44.

The method of sending the audio/video signal 20, which comprises the audiovisual content 52 (video + audio), and/or the video signal 27, which comprises the visual content 54 (video) showing the sign language interpretation of the audiovisual content 52, to the user playback device 42, 44, depends on the playback mode on the user playback device 42, 44. The various playback modes are described below with reference to the user playback device 42, 44.

The user playback device 42, 44 is further configured to receive the audio/video signal 20 and/or the video signal 27, mentioned above, which originate from the audio/video decoder device 40.

To this end, the audio/video decoder device 40 and the user playback device 42, 44 can be functionally connected, for example by way of respective connection ports and a connection cable, for example of the HDMI type.

The audio/video decoder device 40 can be further configured to execute the setting of the basic operating parameters of that audio/video decoder device 40, and more generally of the system 10 according to the invention.

The audio/video decoder device 40 can be further configured to give access to the plurality of available audiovisual content 52, by making available a list and/or a catalog of live and/or on-demand audiovisual content 52.

By way of the audio/video decoder device 40, the user can choose audiovisual content 52 that is broadcast live or audiovisual content 52 available on-demand, from the content on offer, and can then play back the audiovisual content 52 using one of the various playback modes described below with reference to the user playback device 42, 44.

The audio/video decoder device 40 can be further configured to update periodically, for example every day, the list and/or the catalog of available live and/or on-demand audiovisual content 52.

In an embodiment, the audio/video decoder device 40 is further configured to subtitle, i.e. to automatically generate subtitles for, the audiovisual content 52 (video + audio) in real time, by way of automatic voice recognition.

The user playback device 42, 44 of the final user group 16 is configured to play back the audiovisual content 52 (video + audio), comprised in the audio/video signal 20, and/or the visual content 54 (video) showing the sign language interpretation of the audiovisual content 52, comprised in the video signal 27, which originate from the audio/video decoder device 40. In particular, the user playback device 42, 44 is configured to display the video component of the audiovisual content 52, and reproduce the audio component of that audiovisual content 52. In particular, the user playback device 42, 44 is configured to display the video component of the visual content 54.

Preferably, the user playback device 42, 44 comprises at least one screen, for example of the television or computer monitor type. Preferably, the user playback device 42, 44 comprises at least one loudspeaker, for example of the stereo type.

The user playback device 42, 44 can be further configured to give access to the plurality of available audiovisual content 52, by displaying a list and/or a catalog of live and/or on-demand audiovisual content 52, which the user can select via adapted selection commands.

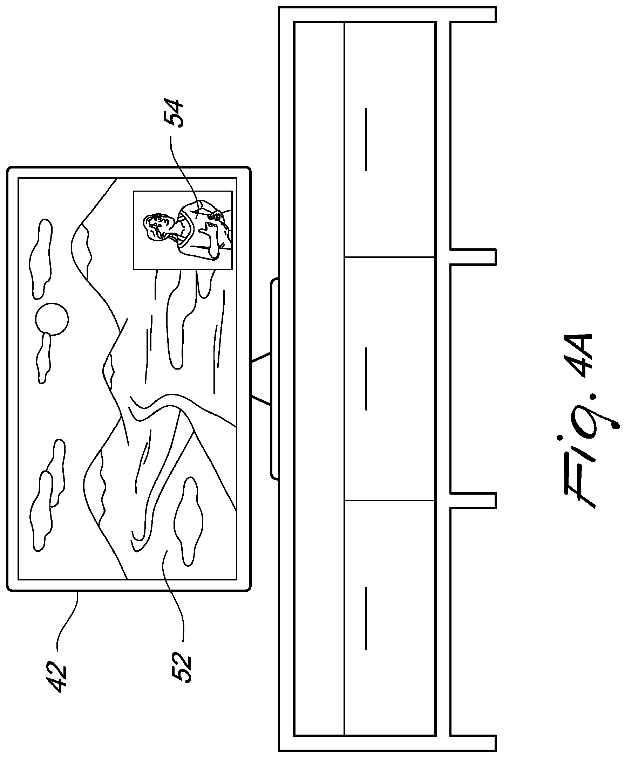

With reference to Figure 4A, in an embodiment, the final user group 16 comprises a single user playback device 42.

In a first variation of this embodiment (shown in Figure 4A), in a first playback mode, called "Picture in Picture mode", the user playback device 42 is configured to play back both the audiovisual content 52 (video + audio), comprised in the audio/video signal 20, and the visual content 54 (video) showing the sign language interpretation of the audiovisual content 52, comprised in the video signal 27, mutually synchronized.

In general, the Picture in Picture (PiP) is a feature of some televisions or the like. The main content is displayed full-screen, and simultaneously the secondary content is displayed superimposed, in a box arranged at the side of the screen. Typically, the audio component reproduced is that of the main content, displayed full-screen.

In particular, in this first playback mode, the user playback device 42 is configured to play back the audiovisual content 52 (video + audio) full-screen and the visual content 54 (video), which as mentioned shows the sign language interpretation of the audiovisual content 52, in an inset box or with a background, for example arranged at bottom right (or left) of the screen.

In a second variation of this embodiment (not shown), in a second playback mode, called "audiovisual content 52 only mode", the user playback device 42 is configured to play back only the audiovisual content 52 (video + audio), comprised in the audio/video signal 20.

In a third variation of this embodiment (not shown), in a third playback mode, called "visual content 54 only mode", the user playback device 42 is configured to play back only the visual content 54 (video), which as mentioned shows the sign language interpretation of the audiovisual content 52, comprised in the video signal 27.

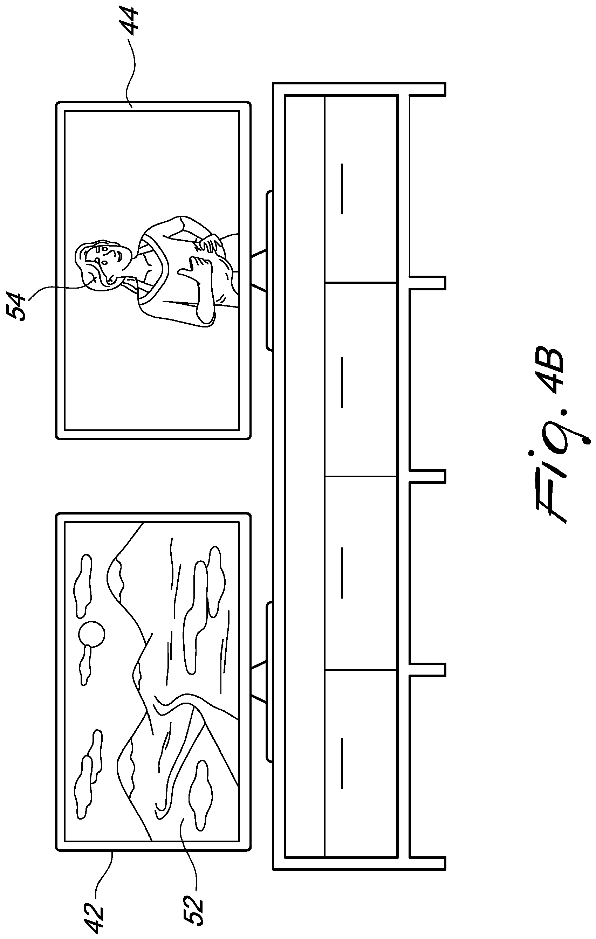

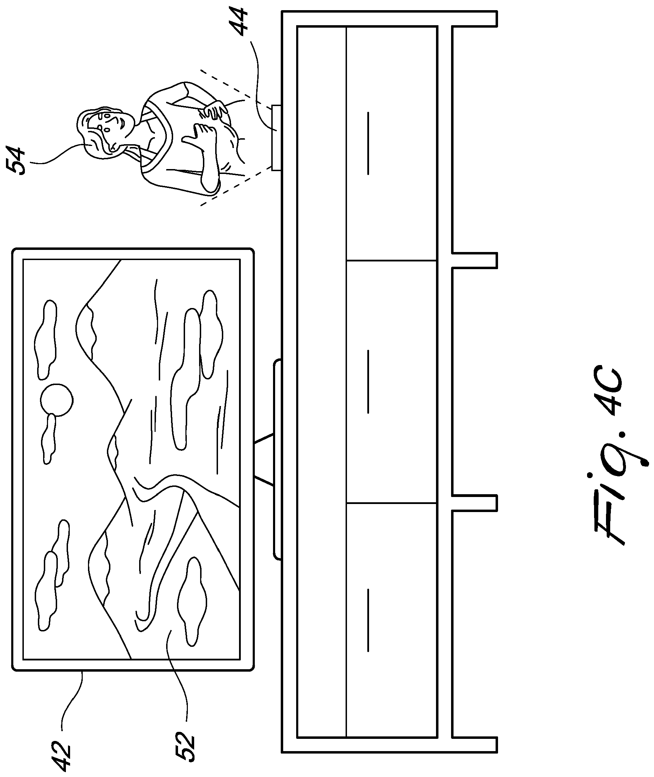

With reference to Figures 4B and 4C, in another embodiment, the final user group 16 comprises a pair of, i.e. a first and a second, user playback devices 42, 44.

In a fourth playback mode, called "separate mode", the first user playback device 42 is configured to play back the audiovisual content 52, comprised in the audio/video signal 20, while the second user playback device 44 is configured to play back the visual content 54, showing the sign language interpretation of the audiovisual content 52, comprised in the video signal 27.

In a first variation of this embodiment (shown in Figure 4B), both the first user playback device 42 and the second user playback device 44 are screens, of which at least the first device 42 is provided with a loudspeaker.

In a second variation of this embodiment (shown in Figure 4C), advantageously, the first user playback device 42 is a screen provided with a loudspeaker, while the second user playback device 44, which as mentioned reproduces the visual content 54 showing the sign language interpretation of the audiovisual content 52, is a holographic device.

Advantageously, the user playback device 42, 44 is configured to operate according to a plurality of the various playback modes described above, obviously not simultaneously but one at a time, alternatively.

Advantageously, the playback modes on the user playback device 42, 44 of the audiovisual content 52 (video + audio) and/or of the visual content 54 (video) showing the sign language interpretation of the audiovisual content 52, and as a consequence the method of sending the respective audio/video 20 and video 27 signals to that device 42, 44, can be selected by the user, for example by way of a suitable mode selection command. In other words, the user can command a transition, or switch, from one playback mode to another.

The transition from one playback mode to another, for example following a mode selection command imparted by the user, is very swift in the system according to the invention, because the audio/video decoder device 40 receives the audio/video 20 and video 27 signals in a single streaming signal 30 for streaming services right from the start.

In traditional systems, this switch, or transition, from one mode to another is handled differently, and in particular more slowly. When the audio/video decoder device requests, for example, Picture in Picture mode, the central computer produces a single audiovisual signal in output, which comprises the two audiovisual contents already combined, with consequent additional time for buffering and the possibility of dropouts (for example, the loss of a few seconds of audiovisual content that is broadcast live).

Since the playback mode, and as a consequence the send mode, are processed and handled by the audio/video decoder device 40, the system according to the invention offers great versatility in showing the audiovisual content 52 (video + audio) and/or the visual content 54 (video) showing the sign language interpretation of the audiovisual content 52. For example, the user can choose to see the visual content 54 larger or smaller, position it at different points of the screen, etc.

In a preferred embodiment, the final user group 16 of the system 10 according to the invention further comprises one or more interface devices 46, for example remote controls, headphones, keyboards, etc.

In this embodiment, the audio/video decoder device 40 comprises an interface module (not shown), for example of the infrared or Bluetooth type, which is configured to establish and maintain a unidirectional or bidirectional communication, preferably of the wireless type, with the interface devices 46 described above.

For example, these interface devices 46 can be configured to select audiovisual content 52 from the list and/or the catalog of available live and/or on-demand audiovisual content 52. Again for example, these interface devices 46 can be configured to select the playback mode on the user playback device 42, 44, and as a consequence the method of sending the audio/video signal 20 and/or the video signal 27 to said user playback device.

In a preferred embodiment, the final user group 16 of the system 10 according to the invention further comprises a wearable device (not shown) of the Sound Shirt type. This wearable device is substantially an item of clothing, typically a T-shirt, which comprises a plurality of electromechanical actuators, obviously of small dimensions, which can be actuated based on the audio component of the audiovisual content 52 and are preferably incorporated in the fabric of the item of clothing.

In general, the actuators of the wearable device enable the user, i.e. the deaf person who wears this wearable device, to perceive the sound (speech, music, etc.) through touch. In particular, the actuators of the wearable device enable the user, i.e. the deaf person who wears this wearable device, to perceive the audio component of the audiovisual content 52 through touch.

In this embodiment, the audio/video decoder device 40 comprises an interface module (not shown), for example of the Bluetooth type, which is configured to establish and maintain a unidirectional or bidirectional communication, preferably of the wireless type, with the wearable device of the Sound Shirt type, so as to send a plurality of actuation commands to the actuators of that wearable device based on the audio component of the audiovisual content 52.

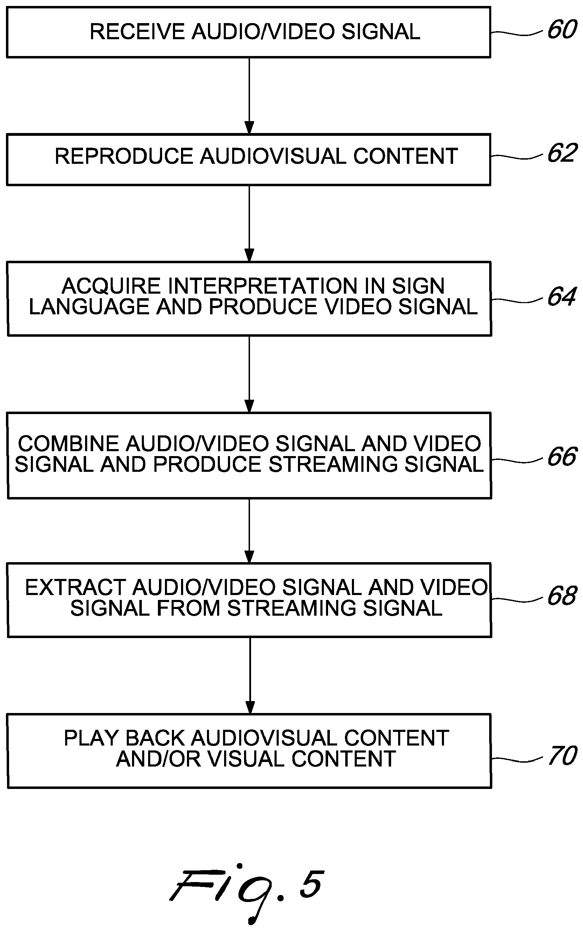

With reference to Figure 5, the method for assisting the viewing of audiovisual content for deaf persons according to the present invention comprises the steps described below.

Initially, in step 60, the production group 12 of the system 10 according to the invention, in particular the corresponding audio/video mixer 22, receives an audio/video signal 20, for example a television signal, that is for example broadcast live and/or prerecorded, for example in high definition, which comprises audiovisual content 52 (video + audio) and which originates from an audiovisual source (not shown).

In step 62, the production group 12, in particular the corresponding interpreter playback device 24, plays back the audiovisual content 52 comprised in the audio/video signal 20, specifically displaying the video component of the audiovisual content 52 and reproducing the audio component of that audiovisual content 52.

In step 64, the production group 12, in particular the corresponding video acquisition device 26, acquires an interpretation (or performance) in sign language, for example Italian sign language, performed by a sign language interpreter 90 based on the audiovisual content 52 being played back, and produces a video signal 27 which comprises visual content 54 (video) showing the sign language interpretation of the audiovisual content 52 being played back.

In step 66, the production group 12, in particular the corresponding audio/video encoder device 28, combines and synchronizes the audio/video signal 20, which comprises the audiovisual content 52 (video + audio), and the video signal 27, which comprises the visual content 54 (video) showing the sign language interpretation of the audiovisual content 52, and produces a streaming signal (or stream) 30 which comprises a synchronized combination of the audio/video signal 20 and of the video signal 27.

In step 68, the final user group 16 of the system 10 according to the invention, in particular the corresponding audio/video decoder device 40, extracts the audio/video signal 20, which comprises the audiovisual content 52 (video + audio), and the video signal 27, which comprises the visual content 54 (video) showing the sign language interpretation of the audiovisual content 52, from the streaming signal 30.

Finally, in step 70, the final user group 16, in particular the corresponding user playback device 42, 44, plays back the audiovisual content 52 (video + audio), comprised in the audio/video signal 20, and/or the visual content 54 (video) showing the sign language interpretation of the audiovisual content 52, comprised in the video signal 27, specifically displaying the video component of the audiovisual content 52 and reproducing the audio component of that audiovisual content 52, and specifically displaying the video component of the visual content 54.

In practice it has been found that the present invention fully achieves the set aim and objects. In particular, it has been seen that the system and the method for assisting the viewing of audiovisual content for deaf persons thus conceived make it possible to overcome the qualitative limitations of the known art, in that they make it possible to obtain better effects than those that can be obtained with conventional solutions and/or similar effects at lower cost and with higher performance levels.

An advantage of the system and of the method for assisting the viewing of audiovisual content for deaf persons according to the present invention consists in that they make it possible to produce and provide a sign language interpretation of the audio component, in particular the speech, of any audiovisual content.

Another advantage of the system and of the method for assisting the viewing of audiovisual content for deaf persons according to the present invention consists in that they make it possible to make the audio component, in particular the speech, of any audiovisual content easily comprehensible to deaf persons.

Another advantage of the system and of the method for assisting the viewing of audiovisual content for deaf persons according to the present invention consists in that they make the audio component, in particular the speech, of any audiovisual content easily accessible to deaf persons.

Another advantage of the system and of the method for assisting the viewing of audiovisual content for deaf persons according to the present invention consists in that they are easy to use in any dwelling where deaf persons reside.

Although the system and the method for assisting the viewing of audiovisual content for deaf persons according to the invention have been conceived in particular for assisting the viewing of television programs, that are broadcast live and/or prerecorded, by deaf persons (or the hard of hearing), they can also be used, more generally, for assisting the viewing of any audiovisual content of any kind.

For example, the system and the method of assistance according to the invention can be used for assisting the viewing of an audiovisual tale for children, where a sign language interpreter brings a deaf child into the "magical reality" of a fairy tale or of a fable through a sign language.

Again for example, the system and the method of assistance according to the invention can be used for assisting the viewing of an audiovisual guide for visitors to museums and/or art exhibitions, where a sign language interpreter accompanies a deaf visitor on their visit to a museum and/or art exhibition through a sign language, preferably as an aid to a physical guide.

Again for example, the system and the method of assistance according to the invention can be used for assisting the viewing of audiovisual courses and/or lessons in sign language for non-deaf parents who have deaf children.

The invention thus conceived is susceptible of numerous modifications and variations, all of which are within the scope of the appended claims; by way of non-limiting example, the person skilled in the art will understand without effort that there can also be a feature to automatically subtitle audiovisual content, in real time, with voice recognition of the speech.

Except where indicated otherwise, the various embodiments described above can be combined in order to provide further and/or alternative embodiments. In addition, the present description covers combinations of variations and preferred embodiments that are not explicitly described.

Moreover, all the details may be substituted by other, technically equivalent elements.

In practice the materials employed, provided they are compatible with the specific use, and the contingent dimensions and shapes, may be any according to requirements and to the state of the art.

In conclusion, the scope of protection of the claims shall not be limited by the explanations or by the preferred embodiments illustrated in the description by way of examples, but rather the claims shall comprise all the patentable characteristics of novelty that reside in the present invention, including all the characteristics that would be considered as equivalent by the person skilled in the art.

The disclosures in Italian Patent Application No. 102023000001530 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system (10) for assisting the viewing of audiovisual content for deaf persons, which comprises at least one production group (12) and at least one final user group (16), which are mutually connected via a telematic communication network (18);
wherein said production group (12) comprises:
- an audio/video mixer (22) configured to receive an audio/video signal (20) comprising audiovisual content (52);
- an interpreter playback device (24) configured to play back said audiovisual content (52) comprised in said audio/video signal (20);
- a video acquisition device (26) configured to acquire a sign language interpretation of said audiovisual content (52) and to produce a video signal (27) comprising visual content (54) showing said sign language interpretation of said audiovisual content (52); and
- an audio/video encoder device (28) configured to combine and synchronize said audio/video signal (20) and said video signal (27), and to produce a streaming signal (30) comprising a synchronized combination of said audio/video signal (20) and said video signal (27);
wherein said final user group (16) comprises:
- an audio/video decoder device (40) configured to extract said audio/video signal (20) and said video signal (27) from said streaming signal (30); and
- at least one user playback device (42, 44) configured to play back said audiovisual content (52) comprised in said audio/video signal (20), and/or said visual content (54), showing said sign language interpretation of said audiovisual content (52), comprised in said video signal (27).

2. The system (10) for assisting the viewing of audiovisual content for deaf persons according to claim 1, further comprising at least one central distribution computer (14), which is mutually connected both to said production group (12) and to said final user group (16) via said telematic communication network (18);
wherein said central distribution computer (14) is configured to receive said streaming signal (30) arriving from said production group (12) and to transmit said streaming signal (30) to said final user group (16).

3. The system (10) for assisting the viewing of audiovisual content for deaf persons according to claim 2, wherein said central distribution computer (14) comprises a memory unit and is further configured to store said streaming signal (30).

4. The system (10) for assisting the viewing of audiovisual content for deaf persons according to any one of the preceding claims, wherein said interpreter playback device (24) is arranged proximate to a sign language interpreter (90), so that said interpreter (90) can see and hear said audiovisual content (52) played by said interpreter playback device (24).

5. The system (10) for assisting the viewing of audiovisual content for deaf persons according to any one of the preceding claims, wherein said video acquisition device (26) is arranged proximate to said sign language interpreter (90), so that said interpreter (90) can be in the field of view of said video acquisition device (26).

6. The system (10) for assisting the viewing of audiovisual content for deaf persons according to any one of preceding claims, wherein said final user group (16) comprises a single user playback device (42).

7. The system (10) for assisting the viewing of audiovisual content for deaf persons according to claim 6, wherein said user playback device (42) is configured to play back both said audiovisual content (52) comprised in said audio/video signal (20) and said visual content (54) showing said sign language interpretation of said audiovisual content (52) comprised in said video signal (27).

8. The system (10) for assisting the viewing of audiovisual content for deaf persons according to claim 6, wherein said user playback device (42) is configured to play back only said audiovisual content (52) comprised in said audio/video signal (20).

9. The system (10) for assisting the viewing of audiovisual content for deaf persons according to claim 6, wherein said user playback device (42) is configured to play back only said visual content (54), showing said sign language interpretation of said audiovisual content (52), comprised in said video signal (27).

10. The system (10) for assisting the viewing of audiovisual content for deaf persons according to any one of the preceding claims, wherein said final user group (16) comprises a first and a second user playback device (42, 44).

11. The system (10) for assisting the viewing of audiovisual content for deaf persons according to claim 10, wherein said first user playback device (42) is configured to play back said audiovisual content (52), comprised in said audio/video signal (20), while said second user playback device (44) is configured to play said visual content (54), showing said sign language interpretation of said audiovisual content (52), comprised in said video signal (27).

12. The system (10) for assisting the viewing of audiovisual content for deaf persons according to claim 10 or 11, wherein said second user playback device (44) is a holographic device.

13. The system (10) for assisting the viewing of audiovisual content for deaf persons according to any one of the preceding claims, wherein said final user group (16) further comprises a wearable device comprising a plurality of electromechanical actuators which can be actuated based on the audio component of said audiovisual content (52); and wherein said audio/video decoder device (40) comprises an interface module configured to establish and maintain a communication with said wearable device, so as to send a plurality of actuation commands to said actuators of said wearable device based on the audio component of said audiovisual content (52).

14. A method for assisting the viewing of audiovisual content for deaf persons by means of at least one production group (12) and at least one final user group (16), which are mutually connected via a telematic communication network (18), which comprises the steps of:
- receiving (60) an audio/video signal (20) comprising audiovisual content (52), via an audio/video mixer (22) comprised in said production group (12);
- playing back (62) said audiovisual content (52) comprised in said audio/video signal (20), via an interpreter playback device (24) comprised in said production group (12);
- acquiring (64) a sign language interpretation of said audiovisual content (52), and producing (64) a video signal (27) comprising visual content (54) showing said sign language interpretation of said audiovisual content (52), by means of a video acquisition device (26) comprised in said production group (12);
- combining and synchronizing (66) said audio/video signal (20) and said video signal (27), and producing (66) a streaming signal (30) comprising a synchronized combination of said audio/video signal (20) and said video signal (27), by means of an audio/video encoder device (28) comprised in said production group (12);
- extracting (68) said audio/video signal (20) and said video signal (27) from said streaming signal (30), by means of an audio/video decoder device (40) comprised in said final user group (16); and
- playing back (70) said audiovisual content (52), comprised in said audio/video signal (20), and/or said visual content (54), showing said sign language interpretation of said audiovisual content (52), comprised in said video signal (27), by means of at least one user playback device (42, 44) comprised in said final user group (16).
